# EUROPÄISCHE PATENTSCHRIFT

(11) **EP 1 872 643 B1**
(45) Veröffentlichungstag und Bekanntmachung des Hinweises auf die Patenterteilung: **24.12.2014**
(21) Anmeldenummer: 07012637.0
(22) Anmeldetag: 28.06.2007
(51) Int. Cl.: A01B 35/22

(54) **Grubberzinken mit separatem Scharträger**
Grubber tooth with separate blade support
Dent de sacrificateur doté d'un support de soc

(30) Priorität: 28.06.2006 DE 102006029885; 25.06.2007 DE 102007029406
(43) Veröffentlichungstag der Anmeldung: 02.01.2008
(73) Patentinhaber: Lemken GmbH & Co. KG, 46519 Alpen (DE)
(72) Erfinder: Karsten, Sebastian, 46519 Alpen (DE); Achten, Georg, 47918 Tönisvorst (DE); Siebers, Josef, 46509 Xanten (DE); Wohlgemut, Horst, 46519 Alpen (DE)
(74) Vertreter: Schulte, Jörg

(56) Entgegenhaltungen:
- WO-A-00/28803
- AU-A- 5 968 073
- DE-A1- 3 628 910
- US-A- 1 132 335
- US-A- 2 877 061

## Beschreibung

Die Erfindung betrifft einen Grubberzinken mit separatem Scharträger, wobei der Scharträger Befestigungspunkte bzw. Schnittstellen für die Befestigung mindestens einer Schareinheit aufweist und über eine Fixierung verfügt, die in eine korrespondierende Fixierung des Zinkens eingreift und so eine Formschlussverbindung mit dem Zinken bildet, die über Mittel gesichert ist, wobei der Scharträger U-förmig und mit zwei den Zinken umfassenden Flanken und so als Kompaktbauteil auf den Zinken aufschiebbar ausgebildet ist und wobei der Zinken und der Scharträger zwei Fixierungen aufweisen, die über die Höhe gesehen im Abstand zueinander angeordnet und der Vorderseite und der Unterseite des Zinkens zugeordnet sind.

Derartige Grubberzinken mit Scharträger sind z. B. der deutschen Patentschrift DE 36 28 910 C2 zu entnehmen und werden bei Grubbern für die Stoppelbearbeitung, aber auch für die tiefere Bodenlockerung und Bodenbearbeitung eingesetzt. Für die Stoppelbearbeitung wird der am Zinken befestigte Scharträger mit Scharspitze, Leitblech und Flügelscharen bestückt, wodurch der Boden ganzflächig abgeschält und gemischt wird. Für die tiefere Bodenbearbeitung werden dagegen die Flügelschare abgeschraubt und es wird nur mit Scharspitze und Leitblech gearbeitet, da der Boden nur gelockert und auch Zugkraft eingespart werden soll. Häufig werden dann auch eine schmalere Scharspitze und ein schmaleres Leitblech eingesetzt, um Zugkraft und auch Treibstoff zu sparen. Um einen Verschleiß der Scharträger an den Aufnahmeflächen für die Flügelschare zu vermeiden, wurden Scharträger ohne diese Aufnahmeflächen eingesetzt. Dies hat aber einen großen Umrüst- und Zeitaufwand zur Folge, da viele Schrauben mit Werkzeug gelöst und Bauteile demontiert bzw. montiert werden müssen, insbesondere auch dann, wenn der Acker in zwei Arbeitsgängen bearbeitet werden soll, zuerst flach und ganzflächig und danach tief mit schmaleren oder anderen Werkzeugen. Die DE 10 16 473 C1 zeigt eine Ziehhacke, bei der zwischen Gerätehalter und Zugstiel eine Klemmbefestigung vorgesehen ist. Diese Klemmbefestigung liegt im Erdstrom, kann sich damit leicht zusetzen und ist auch nur für die im Verhältnis geringen Belastungen einer Ziehhacke vorgesehen. Der US 19 07 566 ist ein Grubber zu entnehmen, bei dem das Schar auf zwei Pins aufgesetzt werden kann, wobei der Scharträger mit dem Zinken fest verbunden ist. Das Schar selbst muss über eine Schraube zusätzlich gesichert werden. Damit entspricht der Umrüst- und Zeitaufwand in etwa dem der DE 36 28 910 C2, wobei nicht der Scharträger sondern nur das Schar auswechselbar ist. Nach der DE 23 52 262 C3 ist das Bearbeitungswerkzeug in einer Halterung festgelegt, die ihrerseits als eine Art Scharträger wiederum lösbar über eine Sicherungshülse mit der geschwungenen Blattfeder verbunden ist. Der Scharträger wird über zwei über die Höhe verteilt angeordnete Fixierungen mit der Blattfeder verbunden, wobei die eine Fixierung aus der Sicherungshülse 2 besteht und die andere Fixierung eine Bohrung und einen korrespondierend ausgebildeten Arretierungszapfen aufweist. Nachteilig ist, dass die Blattfeder zwangsweise mit ihrer Breitseite gegen den Erdstrom angeordnet ist und die Fixierungen entsprechend ausgebildet sein müssen. Die obere, als Sicherungshülse ausgebildete Fixierung kann durch den Erdstrom erfasst und gelöst werden, zumal sich die Sicherungshülse wie schon erwähnt letztlich im Erdstrom befindet, sodass sich dann auch zwangsweise die untere Fixierung mit löst. Andererseits kann es zu einem Festsetzen der Sicherungshülse kommen, wenn sie längere Zeit im Einsatz ist. Nachteilig ist schließlich, dass beim Montieren nur die untere Fixierung sofort wirksam wird, während erst mit Abschluss der Montage auch die obere Fixierung ihre Funktion übernimmt. In der WO 00/28803 ist ein Grubberzinken offenbart, auf den von unten ein Scharträger aufgeschoben wird. Dieser wird gegen die Unterseite des Zinkens angedrückt und dann über eine darüber angeordnete Schraube fixiert, so dass sich quasi zwei über die Höhe gesehen im Abstand zueinander angeordnete Fixierungen ergeben. Nachteil ist, dass es einiger Geschicklichkeit bedarf, um diesen Scharträger richtig am Zinken festzulegen. Erst wenn die Schraube richtig eingeführt werden kann und angezogen ist, kann der Scharträger am Zinken wirksam seine Position einnehmen. Der Montageaufwand ist groß.

Der Erfindung liegt die Aufgabe zugrunde, einen Grubberzinken mit Scharträger für Bodenbearbeitungsgeräte zu schaffen, der schnell und sicher und mit einfachen Werkzeugen aus- und umgerüstet werden kann.

Die Aufgabe wird gemäß der Erfindung dadurch gelöst, dass der U-förmige Scharträger mit zwei den Zinken umfassenden Flanken sich in den Flanken abstützende als Fixierungen dienende Querachsen und der Zinken korrespondierende Fixierungen aufweist und dass das Mittel zur Wahrung der Formschlussverbindung ein erst nach Erreichen der Fixierposition anzubringendes kombiniertes Einsteck- und Klemmteil ist.

Der jeweilige Scharträger kann dadurch schnell und ohne Werkzeug vom Grubberzinken gelöst oder auch an diesen angebaut werden. Wenn man mehrere Scharträger mit unterschiedlichen Schareinheiten auf dem Betrieb bereit hält oder mit dem Bodenbearbeitungsgerät mitführt, kann man das Bodenbearbeitungsgerät ohne lange Umrüstzeiten kurzfristig für das gewünschte Bearbeitungsverfahren vorbereiten. Dabei kann das ganze Gerät entsprechend umgerüstet werden, ohne dass ein allzu großer Zeitaufwand damit verbunden ist. Man kann von Tiefenarbeit auf reine Grubberarbeit usw. problemlos überwechseln. Der Scharträger wird vor dem eigentlichen Festlegen oder Festschrauben mit seinen Querachsen eingeklinkt. Diese Querachsen stützen sich beidseitig an den Flanken ab bzw. sind mit diesen verbunden und können so entsprechend hohe Kräfte aufnehmen. Besonders vorteilhaft ist dabei, dass sie das Aufschieben des Scharträgers auf den Zinken begünstigen und ermöglichen, dass dann, wenn die obere Fixierung hergestellt ist, d. h. die Querachse in dieser Fixierung drin sitzt, beim Loslassen die untere Querachse automatisch in ihre Fixierposition hineinschwenkt, sodass für die weiteren Arbeiten zusätzliche Mittel nicht benötigt werden. Letztlich kann diese Montage mit einer Hand durchgeführt werden, weil sich der aufgeschobene U-förmige Scharträger in der Fixierposition hält, ohne dass das Einsteck- und Klemmteil schon angebracht sein muss.

Weiter ist gemäß der Erfindung vorgesehen, dass das "Einklinken" begünstigt wird, indem diese Querachsen in eine offene oder U-förmige Fixierung des Zinkens eingreifend ausgebildet sind. Die Querachsen rutschen quasi wie weiter oben schon erwähnt in ihre Fixierposition hinein und können nur dadurch wieder daraus entnommen oder daraus entfernt werden, dass der Scharträger bewusst in die "Herausnahmeposition" geschwenkt wird.

Die als Querachsen dienenden Fixierungen sind gemäß der Erfindung so ausgebildet, dass sie fest mit den Flanken des Scharträgers, diesen zusätzlich versteifend verbunden sind. Damit können die Flanken des Scharträgers auch so ausgebildet werden, dass sie der Form des Zinkens angepasst sind und sich noch besser auf den Zinken aufschieben lassen.

Nach einer weiteren Ausbildung ist vorgesehen, dass die untere Querachse als sich an die Außenseite der Flanken abstützende Schraube ausgebildet ist. Über diese besondere Ausbildung lässt sich das Spiel zwischen den Flanken und dem Zinken praktisch auf Null reduzieren, ohne dass es erforderlich ist, angepasste Querachsen zu verwenden. Dabei wird die Schraube schon vor der Montage entsprechend ausgerichtet, sodass sie immer wieder auf die gleiche Weise verwendbar ist, ohne dass jeweils Anpassungsarbeiten erforderlich werden.

Der als kompaktes Bauteil ausgebildete Scharträger ist sowohl eine Schareinheit bestehend aus einem einteiligen Schar als auch eine Schareinheit bestehend aus einem mehrteiligen Schar mit Schneidteil, Leitteil oder mit Schneidteil, Leitteil und Flügelscharteil tragend ausgebildet und als solcher mit dem Zinken zu verbinden. Alle diese Scharteile sind unabhängig vom Zinken direkt oder mittelbar mit dem Scharträger verbunden und lassen sich so mit diesem zusammen am Zinken festlegen bzw. von diesem wieder lösen, wenn eine andere Art von Werkzeug benötigt wird. Dies ist ein erheblicher Vorteil, auch wenn damit eine gewisse Lagerhaltung verbunden ist.

Beim Stand der Technik ist darauf hingewiesen worden, dass insbesondere bei der Verwendung einer geschwungenen Blattfeder als Zinken diese mit der Breitseite zur Fahrtrichtung angebracht sind. Dies ist bei der Wirkung als Blattfeder zwingend notwendig, bei anderen Anwendungsarten allerdings von Nachteil, weil damit der Zinken mit seiner Breitseite im Erdfluss gehalten wird. Darüber hinaus ist eine Überbeanspruchung des Zinkens bei einer derartigen Anordnung durchaus möglich. Dies wird aber durch eine Weiterbildung der Erfindung verhindert, bei der der Scharträger den mit seiner längeren Achse in Fahrtrichtung angeordneten Zinken umfassend bis einklemmend ausgebildet ist. Bei dieser Anordnung des Zinkens kann der Scharträger auch eleganter und zweckmäßiger ausgebildet werden, weil er den Zinken an den Längsflächen einfassen kann und somit gute Abstützmöglichkeiten hat. Mit dem gleichen Scharträger kann so entweder mit nur einem einteiligen Schar, z. B. mit einem Schmalschar, mit einem mehrteiligen Schar mit Gleitteil oder zusätzlich auch mit Flügelscharen gearbeitet werden, so wie es der gewünschte Arbeitseffekt erfordert. Andere Scharvarianten sind auch denkbar, als auch spezielle Scharträger, die besondere Schnittstellen für die speziellen Arbeitswerkzeuge aufweisen. Der Wechsel der Werkzeuge erfolgt wie schon erwähnt immer komplett mit dem Scharträger und der Austausch von verschlissenen Scharteilen wird nicht am Gerät vorgenommen, sondern an einem bequemen und auch dafür geeigneten gesondert eingerichteten Arbeitsplatz. Dies schließt natürlich einen Wechsel der Scharteile im montierten Zustand der Scharträgers am Gerät nicht aus. Vorteilhaft ist weiter, dass die Fixierungen so vor übermäßiger Verschmutzung geschützt sind, was ein einfaches und schnelles Wechseln der Scharträger mit Schareinheit auch in schwierigen Bedingungen sicherstellt.

Weiter ist gemäß der Erfindung vorgesehen, dass der Scharträger auf der die Schareinheit tragenden Seite gegenüberliegenden Rückseite einen Anschlag aufweist, der einen das Einführen eines keilförmigen Steckteils ermöglichenden Abstand zum eingeführten Zinken aufweisend angeordnet ist. Das Steckteil stützt sich sowohl gegen diesen Anschlag als auch gegen den Zinken selbst ab, sodass auf einfache und zweckmäßige Weise eine Festlegung des Scharträgers am Grubberzinken in Formschlussverbindung gegeben ist.

Durch das Vorsehen eines Steckteils als Mittel, das sich hinter dem Zinken befindet, wird eine einfache Form der Fixierung der Formschlussverbindung vom Scharträger mit dem Grubberzinken erreicht. Das Steckteil ist einfach zugänglich und handhabbar und ist auch vor übermäßiger Verschmutzung geschützt, da es sich hinter dem Zinken befindet. Eine andere Position des Steckteils ist auch denkbar, aber wenig sinnvoll. Andere Mittel für die Fixierung der Formschlussverbindung sind ebenfalls denkbar, wesentlich ist dabei die werkzeuglose Handhabung dieser Mittel. Dass unter Umständen ein leichter Hammerschlag für die Handhabung des Steckteils erforderlich sein kann, wird in diesem Fall auch als werkzeuglos betrachtet.

Eine Sicherung für dieses Steckteil sieht die Erfindung vor, wobei dem keilförmigen Steckteil einen das Steckteil zugleich am Anschlag festlegender Klappstecker mit Sicherungsbügel zugeordnet ist. Ist der Klappstecker umgeschlagen, verhindert der Sicherungsbügel ein versehentliches Herausfallen des keilförmigen Steckteiles, wenn sich dieses versehentlich oder auch mit Absicht aus seiner Klemmposition herausbewegt hat. Gerade bei der Arbeit auf dem Felde ist es von Vorteil, wenn dieses keilförmige Steckteil auf diese Art und Weise und sehr einfach gesichert werden kann.

Um die Baueinheit auch um das Mittel zum Festlegen schnell und sicher zu erweitern, sieht die Erfindung vor, dass der Scharträger eine taschenförmige, von den Flanken der Vorderwand und dem Anschlag gebildete Aufnahme aufweist. Damit wird das Einsteck- und Klemmteil bzw. das keilförmige Steckteil in eine richtige Tasche hineingeschoben, sodass es sich quasi selbst in seine Sicherungsposition hineinbegibt, um dann über den Klappstecker gesichert zu werden. Das Steckteil wird dabei insgesamt rundum geführt, sodass sich auch eine zusätzliche Sicherung durch Reibkräfte ergibt.

Statt der weiter vorn beschriebenen Fixierung in Form der Querachse ist es auch gemäß der Erfindung möglich, die der Unterseite des Zinkens zugeordnete Fixierung als die Kanten des Zinkens einfassender Schuh auszubilden, was den Vorteil hat, dass der Zinken auf der Unterseite nicht gesondert bearbeitet werden muss und nicht nur ein Teilbereich der Unterseite des Zinkens für die Formschlussverbindung mit eingesetzt wird, sondern vielmehr der gesamte untere Teil des Zinkens bzw. der gesamte Bereich des Scharträgers. Das untere Ende des Zinkens wird beim Einschieben oder Aufschieben auf den Zinken nach Erreichen der oberen Querachse bzw. nach Fixierung der oberen Querachse durch diesen Schuh festgehalten und umfasst, sodass die Sicherungs- bzw. Fixierungsposition sehr schnell erreicht und abgesichert ist, bis dann die Sicherung über das Steckteil erfolgt.

In Weiterbildung dieser Schuhausbildung sieht die Erfindung vor, dass die Flanken des U-förmigen Schuhs den Abmessungen des Zinkens und dabei Vorder- und Rückseitenkante des Zinkens durchgehend umfassend ausgebildet sind. Der Schuh ist also genauso rechteckig ausgebildet wie der Zinken bzw. sein unteres Ende, sodass beide ineinandergepasst werden können, um so die Fixierung nach dem Ansprechen der oberen Fixierung zu gewährleisten. Anschließend kann das keilförmige Steckteil eingeschoben und in die Sicherungsposition hineingebracht werden. Schon die Beschreibung verdeutlicht, wie einfach diese Arbeiten vorgenommen werden können.

Die Erfindung zeichnet sich dadurch aus, dass eine einfache und zweckmäßige Festlegung des Scharträgers am Zinken möglich wird, was sich quasi automatisch einstellt, wenn der Scharträger über den Zinken aufgeschoben wird. Dabei erfolgt die erste Fixierung an der Vorderkante oder der Vorderseite des Zinkens, wo eine muldenförmige Ausnehmung vorgesehen ist, in die die Querachse hineinrutscht. Durch die schräge Anordnung des Zinkens wird dann die untere Fixierung automatisch wirksam. Erst nach dem Einschwenken ist es notwendig, die Sicherung in Form des keilförmigen Steckteils anzubringen, wobei die beiden Fixierungen immer wirksam bleiben und dafür sorgen, dass der einmal erreichte Formschluss auch für den gesamten Arbeitsablauf erhalten bleibt. Vorteilhaft ist insbesondere, dass nun die Möglichkeit besteht, die benötigten Werkzeuge, gleich welche Art vorgesehen ist, dem Scharträger zuzuordnen und diese dann als ein Bauteil vorzuhalten, das schnell und einfach mit dem jeweiligen Zinken verbunden werden kann. Ein Austausch auch unterschiedlicher Baueinheiten je nach Anwendungszweck ist möglich und mit kleinem Arbeitsaufwand zu verwirklichen.

Weitere Einzelheiten und Vorteile des Erfindungsgegenstandes ergeben sich aus der nachfolgenden Beschreibung und den zugehörigen Zeichnungen in denen ein Ausführungsbeispiel mit den dazu notwendigen Einzelheiten und Einzelteilen dargestellt ist. Es zeigen:
- Figur 1: eine Seitenansicht des Zinken mit Scharträger mit breiter Schareinheit,
- Figur 2: eine Seitenansicht des Zinken mit Scharträger mit schmaler Schareinheit,
- Figur 3: einen Schnitt durch den Scharträger,
- Figur 4: eine perspektivische Darstellung des Scharträgers,
- Figur 5: eine Detailansicht des Scharträgers mit Steckteil und
- Figur 6: eine andere Ausbildung der unteren Fixierung, dargestellt an einer Seitenansicht des Zinkens mit Scharträger.

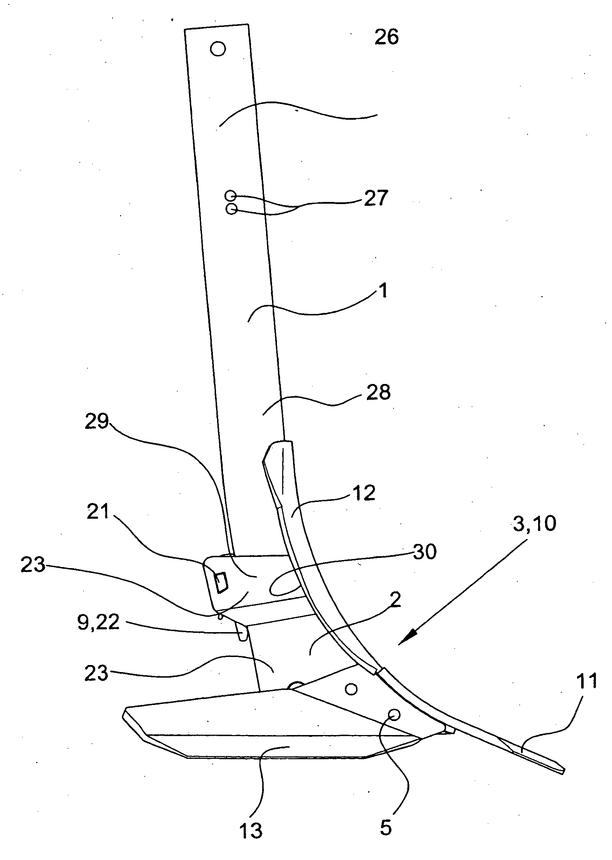

Figur 1 zeigt eine Seitenansicht des Zinkens 1 mit Scharträger 2 und mit einer breit arbeitenden Schareinheit 6, die insbesondere für die flache Bodenbearbeitung eingesetzt wird. Der Zinken 1 weist Befestigungspunkte 26, 27 auf, die für den Anbau des Zinkens 1 an den Rahmen eines hier nicht dargestellten Bodenbearbeitungsgerätes dienen. Der Zinken 1 besteht hier aus einem rechteckigen Profilmaterial 28. Andere Profilformen sind grundsätzlich denkbar wie optimierte gegossene oder geschmiedete Zinken 1. Der rechteckige mit der Vorderkante in Arbeitsrichtung weisende Zinken hat aber stabilitätsmäßig erhebliche Vorteile.

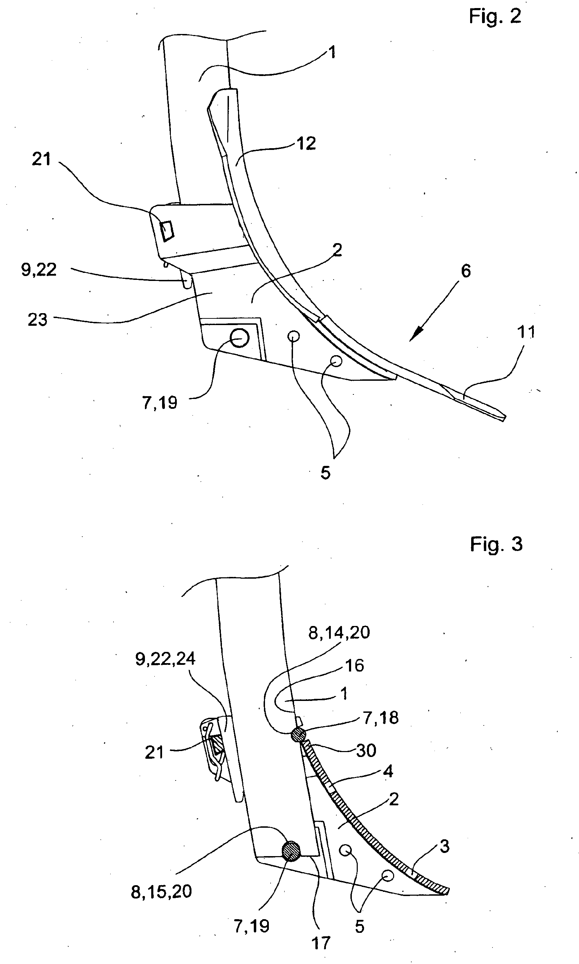

Der Scharträger 2 ist auf den Zinken 1 gesteckt und formschlüssig und verdrehfest mit ihm verbunden. Dies ist insbesondere den Figuren 3, 4 und 5 zu entnehmen. Der Scharträger 2 weist dabei eine taschenförmige Aufnahme 29 auf, die den Zinken 1 aufnimmt und durch die Vorderwand 30, den Flanken 23 und dem Anschlag 21 gebildet wird. Mit Hilfe des Steckteils 22, das als Mittel 9 für die Fixierung des Scharträgers 2 am Zinken 1 dient, wird der Scharträger 2 in Formschlussverbindung am Zinken 1 gehalten. Der Scharträger 2 weist Befestigungspunkte 3, 4 für die Befestigung von Schareinheiten 6 auf, die unterschiedlich ausgebildet sein können. Hier ist eine Schareinheit 6 mit mehrteiligem Schar 10 dargestellt, das aus einem Schneidteil 11, Leitteil 12 und einem Flügelschar 13 besteht. Das Flügelschar 13 ist über die Befestigungspunkte 5 mit dem Scharträger 2 verbunden. Die Schareinheit 6 mit ihren Scharteilen 11, 12, 13 ist unabhängig vom Zinken 1 mit dem Scharträger 2 verbunden bzw. indirekt über den Scharträger 2 mit dem Zinken 1 verbunden.

Figur 2 zeigt ebenfalls einen Zinken 1 mit Scharträger 2 und mit schmaler Schareinheit 6. Hier ist die Schareinheit 6 mit mehrteiligem Schar 10 dargestellt, das nur aus einem Schneidteil 11 und einem Leitteil 12 besteht. Die Befestigungspunkte 5 dienen zur Aufnahme von Flügelscharen 13. Ein Scharträger 2, der mit dieser Schareinheit 6 ausgerüstet ist, ist für die tiefe Bodenbearbeitung gedacht.

Um die Schlagkraft des Bodenbearbeitungsgerätes zu erhöhen, werden die Scharträger 2 den Anforderungen entsprechend mit schmalen, breiten oder speziellen Schareinheiten 6 bestückt oder es werden zwei oder mehrere Sätze von Scharträgern 2 mit den gleichen Schareinheiten 6 bestückt. Vor dem Arbeitseinsatz werden dann die Scharträger 2 mit Schareinheit 6 auf die Zinken 1 gesteckt, die für den gewünschten Arbeiteffekt am besten geeignet sind. Soll der Boden zuerst flach und danach tief bearbeitet werden, müssen nicht erst die einzelnen Scharteile gewechselt werden; es ist lediglich erforderlich, den passenden Scharträger 2 mit Schareinheit 6 auszuwählen und auf den Zinken 1 zu stecken. Das dauert nur Sekunden. Wenn eine Schareinheit 6 verschlissene Scharteile 11, 12, 13 aufweist, werden auch hier nicht erst die einzelnen Scharteile gewechselt sondern lediglich der Scharträger 2 mit der kompletten Schareinheit 6.

Das Bereitstellen mehrerer Sätze von Scharträgern 2 mit Schareinheiten 6 ist zwar in der Anschaffung teuer, ist aber vor dem Hintergrund des Wetterrisikos, der Schlagkraft und der Einsatzkosten pro Hektar wesentlich wirtschaftlicher als bisher bekannte Schnellwechselverfahren von Scharteilen. Die Scharträger 2 werden dann mit den Scharteilen 11, 12, 13 bestückt, wenn Zeit dafür vorhanden ist, z.B. während einer Schlechtwetterperiode.

Figur 3 zeigt einen Schnitt durch den Scharträger 2 und verdeutlicht auch die formschlüssige Verbindung des Scharträgers 2 mit dem Zinken 1. Der Scharträger 2 wird mit seiner als Querachse 19 ausgebildeten Fixierung 7 auf die untere Fixierung 8, 15 des Zinkens 1 gesteckt, die sich an der Unterseite 16 des Zinkens 1 befindet. Die Querachse 18 des Scharträgers 2 greift dabei in die Fixierung 8,14 des Zinkens 1 ein, die auf der Vorderseite 16 des Zinkens 1 ausgebildet ist. Mit Hilfe des als Steckteil 22 ausgebildeten Mittels 9 wird der Scharträger 2 in dieser Formschlussverbindung fixiert. Als Steckteil 22 wird hier ein Klappstecker 24 eingesetzt, der zwischen Zinken 1 und Anschlag 21 gesteckt wird. Deutlich erkennbar sind auch die Befestigungspunkte 3, 4, 5 für die nicht dargestellten Scharteile 11, 12, 13.

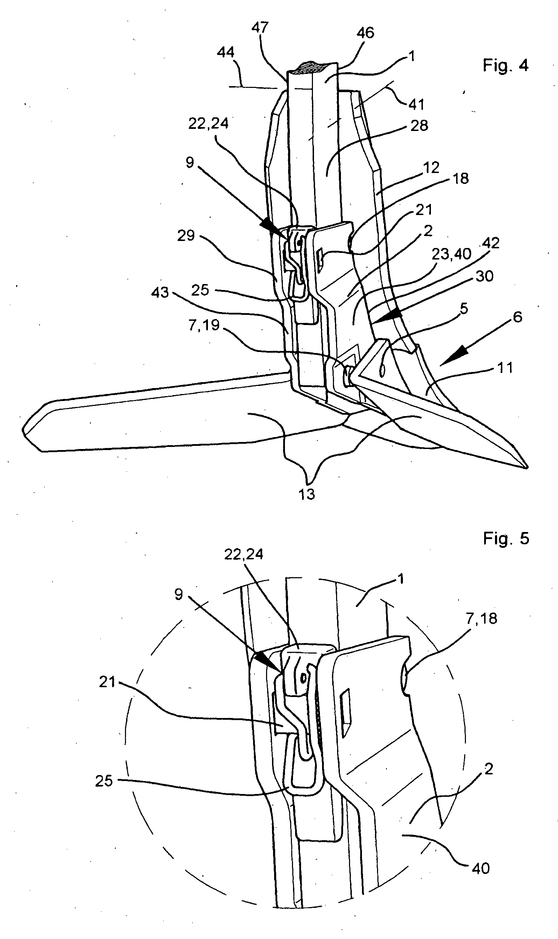

Figur 4 zeigt eine perspektivische Darstellung des Scharträgers 2 und verdeutlicht den Aufbau der taschenförmigen Aufnahme 29 des Scharträgers 2 mit Flanken 23, Vorderwand 30 und Anschlag 21. Sie zeigt auch, wie das Steckteil 22 bzw. der Klappstecker 24 geschützt hinter dem Zinken 1 angeordnet ist. Die Querachsen 18, 19 sind mit den Flanken 23 des Scharträgers 2 verbunden und sorgen zusätzlich für eine Versteifung des Scharträgers 2.

Figur 5 zeigt eine vergrößerte Darstellung der Anordnung des Steckteils 22 mit der Anordnung des Sicherungsbügels 25. Das keilförmige Steckteil 22 ist zwischen Anschlag 21, Zinken 1 und den Flanken 23 sicher fixiert.

Insbesondere Figur 4 zeigt deutlich einmal die Fixierung 7 an der Vorderkante des Zinkens 1 und zum anderen die Fixierung 8 auf der Unterseite 17 des Zinkens 1. Beide bestehen jeweils aus einer Querachse 18 bzw. 19, die dem Scharträger 2 zugeordnet sind, während im Zinken 1 Fixierungen 20, also bogenförmige Ausnehmungen vorgesehen sind. Für die Fixierung 8 wird hier auch noch das Bezugszeichen 14 verwendet.

Die beiden Querachse 18, 19 sind an den Innenseiten der Flanken 23 festgelegt, vorzugsweise dort verschweißt, wobei die Fixierung 8 an der Unterseite 17 des Zinkens 1 auch als Schraube verwirklicht werden kann. Auf eine Darstellung ist hier verzichtet. In Figur 4 ist angedeutet, dass die Querachsen 18, 19, insbesondere die Querachse 19 auch bis zur Außenseite 20 des Scharträgers 2 durchgezogen sein können.

Der Zinken 1 ist mit seiner längeren Achse 41 in Pflugrichtung weisend angeordnet und mit dem Scharträger 2 verbunden. Dadurch kann er entsprechend größere Kräfte aufnehmen, wobei Figur 4 und auch 5 entnommen werden kann, dass es sich um eine Rechteckform bei dem Zinken 1 handelt. Die kürze Achse 44 ist in Figur 4 ebenfalls angedeutet, um die Rechteckform zu verdeutlichen. Die Seiten 42 des Scharträgers 2 bzw. der Flanke 23 sind so geformt, dass sich daran die einzelnen Bauteile der Schareinheit 6 besonders gut anbringen lassen. Hierzu sind die Befestigungspunkte 3, 4 bzw. 5 vorgesehen. Die Rückseite 43 des Scharträgers 2 kann ebenfalls wie in Figur 4 dargestellt besonders geformt werden, was aber nicht zwingend notwendig ist.

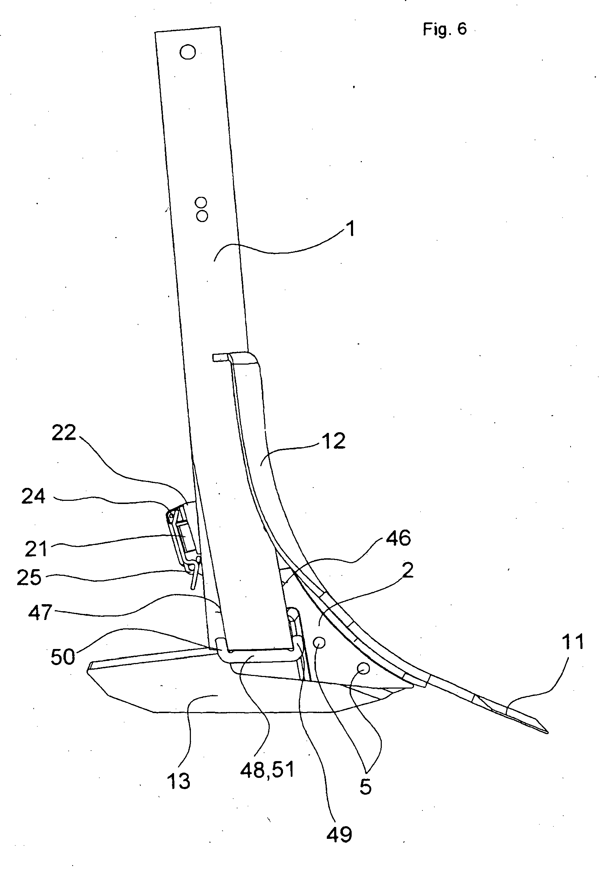

Bei der Ausbildung nach Figur 4 in der die Querachse 19 in eine entsprechende Fixierung 20 eingreift, ist nach Figur 6 für die Kanten 46, 47 des Scharträgers 2 und damit des unteren Endes des Zinkens 1 ein U-förmiger Schuh 48 vorgesehen. Mit U-förmig ist gemeint, dass von der Grundplatte des Schuhs 48 Flanken 49, 50 hochstehen, in die das untere Ende des Zinkens 1 eingeführt werden kann, um ebenso wie über die Fixierung 8 hier eine entsprechende formschlüssige Verbindung zu verwirklichen. Statt des U-förmigen Schuhs 48 ist auch ein topfförmiger Schuh 51 denkbar, d. h. dessen Flanke 49, 50 das untere Ende des Zinkens 1 vollständig einfassen.

## Patentansprüche

1. Grubberzinken mit separatem Scharträger (2), wobei der Scharträger (2) Befestigungspunkte (3, 4, 5) bzw. Schnittstellen für die Befestigung mindestens einer Schareinheit (6) aufweist und über eine Fixierung (7) verfügt, die in eine korrespondierende Fixierung (8) des Zinkens (1) eingreift und so eine Formschlussverbindung mit dem Zinken (1) bildet, die über Mittel (9) gesichert ist, wobei der Scharträger (2) U-förmig und mit zwei den Zinken (1) umfassenden Flanken (23) und so als Kompaktbauteil auf den Zinken (1) aufschiebbar ausgebildet ist und wobei der Zinken (1) und der Scharträger (2) zwei Fixierungen (8, 7) aufweisen, die über die Höhe gesehen im Abstand zueinander angeordnet und der Vorderseite (16) und der Unterseite (17) des Zinkens (1) bzw. Scharträgers (2) zugeordnet sind,
**dadurch gekennzeichnet,**
**dass** der U-förmige Scharträger (2) sich in den Flanken (23) abstützende, als Fixierungen (7, 8) dienende Querachsen (18, 19) und der Zinken (1) korrespondierende Fixierungen (20) aufweist und dass das Mittel (9) zu Wahrung der Formschlussverbindung ein erst nach Erreichen der Fixierposition anzubringendes, kombiniertes Einsteck- und Klemmteil (22) ist,

2. Grubberzinken nach Anspruch 1,
**dadurch gekennzeichnet,**
**dass** die Querachsen (18, 19) in eine offene oder U-förmige Fixierung (20) des Zinkens (1) eingreifend ausgebildet sind.

3. Grubberzinken nach einem der vorhergehenden Ansprüche,
**dadurch gekennzeichnet,**
**dass** die Querachsen (18, 19) fest mit den Flanken (23) des Scharträgers (2), diesen zusätzlich versteifend verbunden sind.

4. Grubberzinken nach einem der vorhergehenden Ansprüche,
**dadurch gekennzeichnet,**
**dass** die Querachse (19) als sich an die Außenseite (40) der Flanken (23) abstützende Schraube ausgebildet ist.

5. Grubberzinken nach einem der vorhergehenden Ansprüche,
**dadurch gekennzeichnet,**
**dass** der Scharträger (2) sowohl eine Schareinheit (6) bestehend aus einem einteiligen Schar als auch eine Schareinheit (6) bestehend aus einem mehrteiligen Schar (10) mit Schneidteil (11), Leitteil (12) oder mit Schneidteil (11), Leitteil (12) und Flügelscharteil (13) tragend ausgebildet und als solcher mit dem Zinken (1) verbunden ist.

6. Grubberzinken nach einem der vorhergehenden Ansprüche,
**dadurch gekennzeichnet,**
**dass** der Scharträger (2) den mit seiner längeren Achse (41) in Fahrtrichtung angeordneten Zinken (1) umfassend bis einklemmend ausgebildet ist.

7. Grubberzinken nach einem der vorhergehenden Ansprüche,
**dadurch gekennzeichnet,**
**dass** der Scharträger (2) auf der die Schareinheit (6) tragenden Seite (42) gegenüberliegenden Rückseite (43) einen Anschlag (21) aufweist, der einen das Einführen eines keilförmigen Steckteils (22) ermöglichenden Abstand zum eingeführten Zinken (1) aufweisend angeordnet ist.

8. Grubberzinken nach einem der vorhergehenden Ansprüche,
**dadurch gekennzeichnet,**
**dass** dem keilförmigen Steckteil (22) einen das Steckteil (22) zugleich am Anschlag (21) festlegender Klappstecker (24) mit Sicherungsbügel (25) zugeordnet ist.

9. Grubberzinken nach einem der vorhergehenden Ansprüche,
**dadurch gekennzeichnet,**
**dass** der Scharträger (2) eine taschenförmige, von den Flanken (23) der Vorderwand (30) und dem Anschlag (21) gebildete Aufnahme (29) aufweist.

10. Grubberzinken nach einem der vorhergehenden Ansprüche,
**dadurch gekennzeichnet,**
**dass** die der Unterseite (17) des Zinkens (1) zugeordnete Fixierung (8) als die Kanten (46, 47) des Zinkens (1) einfassender Schuh (48, 51) ausgebildet ist.

11. Grubberzinken nach Anspruch 10,
**dadurch gekennzeichnet,**
**dass** die Flanken (49, 50) des U-förmigen Schuhs (48, 51) den Abmessungen des Zinkens (1) angepasst und dabei Vorder- und Rückseitenkante (46, 47) des Zinkens (1) durchgehend umfassend ausgebildet sind.

## Claims

1. Cultivator tine with separate share carrier (2), whereby the share carrier (2) features fastening points (3, 4, 5) and interfaces respectively for fastening at least one share unit (6) and has a securing position (7) that engages in the corresponding securing position (8) of the tine (1) and in this way forms a form-locking connection with the tine (1) that is secured with a device (9), whereby the share carrier (2) is U-shaped and is formed with two flanks (23) that encompass the tine (1) and in this way can be slid on the tine (1) as a compact component and whereby the tine (1) and the share carrier (2) feature two securing positions (8, 7), which. seen over the height, are arranged at a distance from each other and are assigned to the front side (16) and the underside (17) of the tine (1) and the share carrier (2) respectively,
**characterised in that**
the U-shaped share carrier (2) features lateral axes (18, 19) supported on the flanks (23) and serving as securing positions (7, 8) and has securing positions (20) corresponding to the tine (1), and the device (9) for securing the form-locking connection is a combined insertion and clamping part (22) that is not to be mounted until after the fixing position is reached.

2. Cultivator tine in accordance with claim 1,
**characterised in that**
the lateral axes (18, 19) are designed to engage in an open or U-shaped securing position (20) of the tine (1).

3. Cultivator tine in accordance with one of the previous claims,
**characterised in that**
the lateral axes (18, 19) are permanently connected with the flanks (23) of the share carrier (2), and reinforce the latter in addition.

4. Cultivator tine in accordance with one of the previous claims,
**characterised in that**
the lateral axis (19) is designed as a screw supported on the outside (40) of the flank (23).

5. Cultivator tine in accordance with one of the previous claims,
**characterised in that**
the share carrier (2) is designed to carry both a share unit (6) consisting of a one-piece share and a share unit (6) consisting of a multi-piece share (10) with cutting part (11), guide part (12) or with cutting part (11), guide part (12) and wing share part (13) and as such is connected to the tine (1).

6. Cultivator tine in accordance with one of the previous claims,
**characterised in that**
the share carrier (2) is formed encompassing through to clamping the tine (1) arranged with its longer axis (41) in the direction of travel.

7. Cultivator tine in accordance with one of the previous claims,
**characterised in that**
the share carrier (2) features an end stop (21) on the rear side (43) opposite the side (42) carrying the share unit (6) that is arranged to feature a clearance from the inserted tine (1) that enables in the insertion of a wedge-shaped slide-on part (22).

8. Cultivator tine in accordance with one of the previous claims,
**characterised in that**
a lynch pin (24) with a locking bow (25) that fixes the slide-on part (22) at the same time at the end stop (21) is assigned to the wedge-shaped slide-on part (22).

9. Cultivator tine in accordance with one of the previous claims,
**characterised in that**
the share carrier (2) features a pocket-shaped recess (29) formed by the flanks (23) of the front wall (30) and the end stop (21).

10. Cultivator tine in accordance with one of the previous claims,
**characterised in that**
the securing position (8) assigned to the underside (17) of the tine (1) is formed as a shoe (48, 51) bordering the edges (46, 47) of the tine (1).

11. Cultivator tine in accordance with claim 10,
**characterised in that**
the flanks (49, 50) of the U-shaped shoe (48, 51) are formed adjusted to the dimensions of the tine (1) and thereby surround the front and rear edge (46, 47) of the tine (1) continuously.

## Revendications

1. Dent de cultivateur avec support de soc (2) séparé, sachant que le support de soc (2) présente des points de fixation (3, 4, 5) ou des interfaces destinées à la fixation d'au moins un ensemble du soc (6) et qu'il dispose d'une fixation (7) qui s'encrante dans une fixation correspondante (8) de la dent (1) en formant ainsi une connexion épousant la forme de la dent (1), qui est sécurisée par des moyens (9), sachant que le support de soc (2) a une forme de U et est formé avec deux flancs (23) entourant la dent (1), de façon à pouvoir ainsi, en tant que composant compact, être poussé sur la dent (1), et sachant que la dent (1) et le support de soc (2) présentent deux fixations (8, 7) qui, vues en hauteur, sont disposées à une certaine distance l'une de l'autre, et sont attribuées à la face avant (16) et à la face inférieure (17) de la dent (1) et du support de soc (2),
**caractérisée par le fait,**
**que** le support de soc en forme de U (2) présente des axes transversaux (18, 19) servant de fixations (7, 8) s'appuyant dans les flancs (23), que la dent (1) présente des fixations (20) correspondantes, et que le moyen (9) destiné à assurer la connexion épousant les formes est une pièce d'insertion et de serrage combinée (22) qui ne doit être posée qu'après que la position de fixation a été atteinte,

2. Dent de cultivateur selon la revendication 1,
**caractérisée par le fait,**
**que** les axes transversaux (18, 19) sont formés de façon à s'encranter dans une fixation ouverte ou en forme de U (20) de la dent (1).

3. Dent de cultivateur selon une des revendications précédentes,
**caractérisée par le fait,**
**que** les axes transversaux (18, 19) sont reliés de façon fixe avec les flancs (23) du support de soc (2), en le rigidifiant ce dernier davantage.

4. Dent de cultivateur selon une des revendications précédentes,
**caractérisée par le fait,**
**que** l'axe transversal (19) est constitué en tant que vis de soutien sur la face extérieure (40) des flancs (23).

5. Dent de cultivateur selon une des revendications précédentes,
**caractérisée par le fait,**
**que** le support de soc (2) ainsi qu'un ensemble du soc (6) consistant en une seule pièce et aussi un ensemble du soc (6) consistant en plusieurs pièces (10) avec pièce coupante (11), pièce directrice (12) ou bien avec pièce coupante (11), pièce directrice (12) et pièce de soc à ailettes (13) constitué de façon porteuse, et relié en tant que tel avec la dent (1).

6. Dent de cultivateur selon une des revendications précédentes,
**caractérisée par le fait,**
**que** le support de soc (2) est constitué de façon à entourer jusqu'à enserrer la dent (1) disposée dans le sens de la marche avec son axe le plus long (41).

7. Dent de cultivateur selon une des revendications précédentes,
**caractérisée par le fait,**
**que** le support de soc (2) présente, sur la face (42) portant l'ensemble de l'ensemble du soc (6) en face de la face arrière (43), une butée (21) qui est disposée en présentant par rapport à la dent (1) introduite une distance permettant l'introduction d'une pièce à enficher (22) en forme de cône.

8. Dent de cultivateur selon une des revendications précédentes,
**caractérisée par le fait,**
**qu'**un connecteur rabattable (24) muni d'un étrier de sécurité (25), pouvant être en même temps fixer la pièce à enficher (22) sur la butée (21), est attribué à la pièce à enficher (22) en forme de cône.

9. Dent de cultivateur selon une des revendications précédentes,
**caractérisée par le fait,**
**que** le support de soc (2) présente une réception (29) en forme de poche, formée par les flancs (23) de la paroi avant (30) et de la butée (21).

10. Dent de cultivateur selon une des revendications précédentes,
**caractérisée par le fait,**
**que** la fixation (8) attribuée à la face inférieure (17) de la dent (1) est formée en tant que patin (48, 51) entourant les bords (46, 47) de la dent (1).

11. Dent de cultivateur selon la revendication 10,
**caractérisée par le fait,**
**que** les flancs (49, 50) du patin en forme de U (48, 51) sont adaptés aux dimensions de la dent (1) et sont constitués à cet effet de façon à entourer de part en part le bord avant et le bord arrière (46, 47) de la dent (1).
